# EUROPEAN PATENT APPLICATION

(11) **EP 4 675 645 A1**
(43) Date of publication of application: **07.01.2026**
(21) Application number: 24186773.8
(22) Date of filing: 05.07.2024
(51) Int. Cl.: G21C 3/334

(54) **A METHOD FOR BUILDING A NEW FUEL ASSEMBLY, A NEW FUEL ASSEMBLY AND A NEW NUCLEAR REACTOR**

(71) Applicant: Westinghouse Electric Sweden AB, 721 63 Västerås (SE)
(72) Inventor: Casal, Juan, 722 46 Västerås (SE); Bergmann, Uffe, 722 20 Västerås (SE)
(74) Representative: Bjerkén Hynell KB

(57) **Abstract**

A method (100) for building a new fuel assembly (1) is described. The method (100) comprises: determining (101) at least one parameter characteristic of a new reactor (13), determining (103) a first number of spacer grid cells (5) and corresponding first number of fuel rods (7), determining a second number of thimble tubes (9) and corresponding second number of receiving means (11), and positions of the receiving means (11) in relation to the spacer grids cells (5) within the spacer grid (3). The method comprises: assembling (105) at least one the new spacer grid (3), mounting (107) each of the second number of thimble tubes (9) in respective receiving means (11) of the second number of receiving means (11) within the at least one spacer grid (3) and loading (109) each of the first number of fuel rods (7) into respective spacer grid cell (5). A new fuel assembly (1) and a new nuclear reactor (13) are also described.

## Description

### TECHNICAL FIELD

The present disclosure relates to a method for building a fuel assembly for a nuclear reactor and particularly the present disclosure relates to a method for building a new fuel assembly for a new nuclear reactor. Further, the present disclosure relates to a new fuel assembly and to a new nuclear reactor.

### BACKGROUND

A Nuclear Power Plant, such as BWR, PWR or VVER, comprises a reactor core, at which the nuclear reactions generating heat take place. A reactor core is formed by a set of fuel assemblies containing the nuclear material. Each fuel assembly comprises a set of sealed metallic cylindrical rods, called fuel rods, containing the fissile material forming a well-defined arrangement. Fuel rods are kept in place by fixtures, called spacer grids at different axial levels. In addition to the fuel rods, in each fuel assembly there are open tubes, sometimes called thimbles. Thimbles are arranged to accommodate either a set of movable neutron absorbers forming a control rod or a Rods Cluster Control Assembly (RCCA), radiation detectors for control purposes or simply empty water volume for improved moderation, i.e. slowing-down of the high-energy neutrons generated by the fission of the nuclear material in the fuel rods. When the control rods or detectors are withdrawn from the core, the thimbles are filled with water causing improved moderation.

As part of the growing interest for smaller Nuclear Power Plants, such as Medium and Small Modular Reactors (SMR), new reactor concepts are under consideration for a wide range of plant capacity. Today, reactor concepts for different ranges of rated thermal power are considered based on underlying old technology relying on light water cooling, such as PWR, BWR or VVER.

US20200373027A1 describes a modular mobile reactor where sections of the reactor can be pre-assembled as modular sections.

Although today's procedures for designing new reactors work well, there are some limitations regarding the procedures effecting i. a. the control and operation of the new reactors. Therefore, there is a need of improvements in the area of constructing and designing new fuel assemblies for new nuclear reactors.

### SUMMARY

It is an objective of the present disclosure to provide an improved method for building a new fuel assembly. Particularly, it is an objective of the present disclosure to provide an improved method enabling building a new customized fuel assembly that is designed for specific requirements such as, for example, desired thermal power of a new nuclear reactor to be built, which new nuclear reactor comprises a number of the new fuel assemblies. Further, there is an objective of the present disclosure to provide an improved method enabling building a new fuel assembly that may improve the operation and the control of a new nuclear reactor where a number of the new fuel assemblies are installed. Yet further, there is an objective of the present disclosure to provide an improved new fuel assembly and an improved new nuclear reactor. These objectives and others are at least partly achieved by the method, fuel assembly and nuclear reactor according to the independent claims, and by the embodiments according to the dependent claims.

Thus, the abovementioned objective is achieved by a method for building a new fuel assembly for a new nuclear reactor. The method comprises the following steps:
- determining at least one parameter characteristic of the new nuclear reactor,
- determining, based on the at least one parameter:
   - a first number of spacer grid cells of a new spacer grid to be assembled of the new fuel assembly and corresponding first number of fuel rods, wherein each fuel rod is to be loaded in respective spacer grid cell,
   - a second number of thimble tubes and corresponding second number of receiving means for the thimble tubes, wherein each of the second number of receiving means is comprised by the new spacer grid and each thimble tube is to be mounted in respective receiving means of the new spacer grid, and
   - positions of the receiving means in relation to the spacer grids cells within the spacer grid.

With the term new is meant herein as: being designed and created from the beginning for specific requirements.

A parameter characteristic of the new nuclear reactor concerns a parameter describing the new nuclear reactor. The parameter characteristic may relate to a dimension of the new nuclear reactor or may relate to a parameter defining the operation of the new nuclear reactor. The parameter characteristic may also relate to the core control possibilities affected by, for example, a ratio of water and fissile material masses. Further, the parameter characteristic may relate to energy or power production planned to be produced by the new nuclear reactor.

Thus, the first number of spacer grid cells and the corresponding first number of fuel rods is determined based on the at least one parameter characteristic of the new fuel reactor. The first number of spacer grid cells and the corresponding first number of fuel rods may be determined by optimization using a calculation program, such as a 3D core simulator, having the at least one parameter characteristic of the new fuel reactor as in input. The number of spacer grid cells and the corresponding number of fuel rods in a nuclear reactor may affect the lateral size of the fuel assembly and hence the flexibility in optimizing (reducing) the leakage of neutrons at the core periphery, given a specified core size, while obeying limitations in e.g. power peaking and discharge burnup.

Since the first number of spacer grid cells is determined and corresponding first number of fuel rods is determined, the number spacer grid cells corresponds to the number of fuel rods. Each of the first number of spacer grid cells is arranged to receive one of the first number of fuel rods. Thus, each of the first number of fuel rods is arranged to be loaded, i.e. to be positioned in one of the first number spacer grid cells.

Further, the second number of thimble tubes and the corresponding second number of receiving means for the thimble tubes is determined based on the at least one parameter characteristic of the new fuel reactor. The second number of thimble tubes and the corresponding second number of receiving means for the thimble tubes may be determined by being calculated using a calculation program, such as a 3D core simulator having the at least one parameter characteristic of the new fuel reactor as in input. The number of thimble tubes in a nuclear reactor may affect the possibility to control core reactivity, i.e. the ability to maintain a fission chain reaction during the evolution of the reactor operation cycle, in between refuelling outages, to compensate for the gradual depletion of fissile material while enabling a limited or zero boron concentration in the reactor water.

Since the second number of thimble tubes is determined and the corresponding second number of receiving means for the thimble tubes is determined, the number of thimble tubes corresponds to the number of receiving means for the thimble tubes. Each one of the second number of thimble tubes is to be mounted in a respective receiving means for the thimble tubes. Thus, each one of the second number of receiving means for the thimble tubes is arranged to receive one of the second number of thimble tubes to be mounted in respective receiving means for the thimble tubes.

Since each of the second number of receiving means is comprised by the new spacer grid, the second number of receiving means constitutes a part of the new spacer grid. According to some embodiments, each of the receiving means may be formed by neighbouring spacer grid cells arranged such that a space is formed between the neighbouring spacer grid cells, which space forms one receiving means for one of the thimble tubes. According to some embodiments, the neighbouring spacer grid cells may be connected to each other such that the space forming the receiving means for one of the thimble tubes is formed.

Further, the positions of the receiving means for the thimble tubes in relation to the spacer grids cells within the spacer grid are determined based on the at least one parameter characteristic of the new nuclear reactor. The positions of the receiving means in relation to the spacer grids cells within the spacer grid may be determined by using a calculation program, such as a 2D neutron lattice code and/or 3D core simulator, to optimize moderation of neutrons by maximizing the core reactivity at hot operating conditions, minimizing reactivity at cold shutdown conditions and minimizing lateral power peaking (energy produced per fuel rod relative to the average energy per fuel rod).

The method further comprises the following steps:
- assembling at least one new spacer grid comprising the first number of spacer grid cells and comprising the second number of the receiving means positioned in the determined positions according to the step of determining positions of the receiving means in relation to the spacer grids cells within the spacer grid,
- mounting each of the second number of thimble tubes in respective receiving means of the second number of receiving means within the at least one spacer grid being assembled according to the step of assembling the at least one new spacer grid and
- loading each of the first number of fuel rods into respective spacer grid cell of the first number of spacer grid cells.

Because of the significant effort required for the development of entirely new fuel assembly concepts, and more specifically the effort required for the development of new spacer grids, the currently preferred option is to use already existing fuel assembly concepts with presently used number and location of fuel rods and thimbles when designing a new SMR. Thus, the same fuel assemblies as in much larger nuclear power plants with the same spacer grids as in much larger nuclear power plants are used with a reduced active height and potentially fewer spacer grids i.e. shorter fuel assemblies. Further, the same number and the same locations of fuel rods and control rod thimbles are used when designing a new SMR.

In a core of an SMR a reduced number of fuel assemblies can be positioned comparing to a standard nuclear power plant. This results in relatively larger fuel assemblies comparing to the whole core size. As a result, the control of such a nuclear power plant is limited. The limited number of fuel assemblies available in the core constitute a limitation of the optimization possibilities of the core regarding both the core loading and its operation. Thus, use of the fuel may be limited.

Therefore, a new method has been developed to enable building a new customized fuel assembly that is designed for specific requirements such as, for example, desired thermal power of a new nuclear reactor comprising a number of the new fuel assemblies.

Thus, according to the invention the first number of spacer grid cells and corresponding first number of fuel rods is determined based on the at least one parameter characteristic of the new nuclear reactor. Further, according to the invention the second number of thimble tubes and corresponding second number of receiving means for the thimble tubes are determined based on the at least one parameter characteristic of the new nuclear reactor. Yet further, according to the invention, positions of the receiving means in relation to the spacer grids cells within the spacer grid are determined based on the at least one parameter characteristic of the new nuclear reactor.

Consequently, an improved method is provided enabling building a new customized fuel assembly that is designed for specific requirements such as desired thermal power of a new nuclear reactor comprising a number of new fuel assemblies.

Optionally, each of the fuel rods has a first length and each of the thimble tubes has a second length, wherein the first length and the second length are determined based on the parameter characteristic of the new nuclear reactor. Thus, the first length and the second length may be determined by being calculated using a calculation program, such as a 3D core simulator, having the at least one parameter characteristic of the new fuel reactor as in input. The length of fuel rods may affect the total amount of the fissile material in the core given a specified lateral core size, the local power peaking (energy produced per length of fuel rod) and thereby the ability to cool the fuel rods given a specified total core flow and total core power, and the pressure drop (hydraulic resistance) of the core and thereby the ability to maintain a certain total core flow given a specified recirculation pump capacity. The length of thimble tubes would typically follow the length of the fuel rods but may affect the mechanical compatibility of the fuel assembly with a specified core height. Consequently, the first length and the second length may depend on one or several requirements for the new nuclear reactor to be build, such as core flow of the new nuclear reactor. As a result, a yet improved method for building a new fuel assembly for a new nuclear reactor may be provided.

According to some embodiments, the first length is equal the second length.

Optionally, each of the fuel rods has a first outer diameter and each of the thimble tubes has a second outer diameter, wherein the first outer diameter and/or the second outer diameter are/is determined based on the parameter characteristic of the new nuclear reactor. Thus, the first outer diameter and second outer diameter may be determined by being calculated using a calculation program, such as a 3D core simulator, having the at least one parameter characteristic of the new fuel reactor as in input. The diameter of fuel rods may affect the amount of the fissile material in the fuel rod and thereby the water-to-uranium ratio which in turn affects the relation between reactivity at hot operation and cold shutdown, i.e., the required number and strength of control rods. The optimum water-to-uranium ratio is dependent on the cycle length, targeted discharge burnup and availability of soluble boron to control reactivity (the longer the cycle, the higher the target burnup and the lower the boron concentration, the lower the optimum water-to-uranium ratio). The diameter of thimble tubes may affect the water-to-uranium ratio in a similar manner and also the lateral power peaking. Consequently, the first outer diameter and the second outer diameter may depend on one or several requirements for the new nuclear reactor to be build, such as the desired cycle length, target discharge burnup and availability of soluble boron of the new nuclear reactor. As a result, a yet improved method for building a new fuel assembly for a new nuclear reactor may be provided.

Optionally, the method comprises:
- determining a distance between centers of neighbouring fuel rods based on the at least one parameter characteristic of the new nuclear reactor and
- loading each of the first number of fuel rods into respective spacer grid cell of the first number of spacer grid cells such as there is the distance between centers of neighbouring fuel rods.

Thus, the fuel roads may be loaded such as each fuel rod is centered within each spacer grid cell such as there is the distance between centers of neighbouring fuel rods.

As an option, each of the receiving means comprises a distance element, such as a dimple and/or a spring, protruding inwards of the receiving means and, for example, towards the center of the receiving means, wherein the distance element is rearranged to position a fuel rod such as there is the distance between centers of neighbouring fuel rods.

Consequently, the distance between the centers of neighbouring fuel rods may be determined by using a data program, such as a 2D lattice code, having the at least one parameter characteristic of the new fuel reactor as in input. The distance between centers of neighbouring fuel rods may affect the water-to-uranium ratio and ability to cool the fuel rods. Consequently, the distance between centers of neighbouring fuel rods may depend on one or several requirements for the new nuclear reactor to be build. As a result, a yet improved method for building a new fuel assembly for a new nuclear reactor may be provided.

Optionally, the step of assembling the at least one spacer grid comprises connecting the first number of spacer grid cells to each other or 3D-printing of the at least one spacer grid.

Thus, the spacer grid cells may be connected to each other, for example by a welding process, or the whole spacer grid may be manufactured by using a 3D-printer.

According to some embodiments each spacer grid comprises an outer mantle enclosing the spacer grid cells.

Optionally, each of the receiving means comprises a ring or a sleeve, wherein mounting of each of the second number of thimble tubes in respective receiving means comprises the step of attaching each of the thimble tubes to respective ring or sleeve.

Optionally, each of the spacer grid cells is a standard spacer grid cell and each of the fuel rods is a standard fuel rod and each of the thimble tubes is a standard thimble tube and each of the receiving means is a standard receiving means. With standard is meant herein a component that is previously developed and readily available and hence provides a cost-effective design and manufacturing solution.

Since each of the spacer grid cells is a standard spacer grid cell and each of the fuel rods is a standard fuel rod and each of the thimble tubes is a standard thimble tube and each of the receiving means is a standard receiving means, these elements do not need to be developed per se for the purpose of the new fuel assembly to be built for a new nuclear reactor. These elements may be chosen from a list of standard elements available on the market as standard elements. Thus, standard spacer grid cells available on the market may be used. Further, standard fuel rods available on the market may be used. Yet further, standard thimble tubes and standard receiving means available on the market may be used. Thus, the process of designing and building a new fuel assembly may be improved regarding the costs and the time required for the process.

Optionally, the standard spacer grid cells are chosen from a limited number of standard grid cell designs. There is a number of different standard grid cell designs available on the market. In order to make the method for building a new fuel assembly more efficient the number of standard grid cell designs is limited to some few, such as, for example, five different designs

Optionally, the method comprises the step of assembling several new spacer grids each comprising the first number of spacer grid cells and the second number of the receiving means positioned in the determined positions, wherein the number of the several new spacer grids is based on the parameter characteristic of the new nuclear reactor, wherein the several new spacer grids are used during building the new fuel assembly to achieve the new fuel assembly.

Thus, the number of the several new spacer grids may be determined by being calculated using a calculation program, such as a 3D core simulator, having the at least one parameter characteristic of the new fuel reactor as in input. The number of the several new spacer grids may affect the ability to cool the fuel rods by mixing hot and cold water (PWR and VVER) or water and steam (BWR) by adding turbulence to the coolant flow given a specified total core flow and thermal power. Also, it may affect the ability to laterally support the fuel rods and prevent significant vibrations that may cause damage to the fuel rods, given the total core flow and core height. Consequently, the number of the several new spacer grids may depend on one or several requirements for the new nuclear reactor to be build, such as total core flow and core height of the new nuclear reactor. As a result, a yet improved method for building a new fuel assembly for a new nuclear reactor may be provided.

Optionally, the at least one parameter characteristic of the new nuclear reactor is at least one of: the rated core thermal power, the rated total core flow, recirculation pump capacity, dimensions of the reactor core, an operating condition such as the cycle length and the soluble boron concentration, an operating constraint such as limitation on power peaking, targeted discharge burnup, range of U-235 enrichment, and economic factors such as costs of uranium feed, conversion enrichment and fuel fabrication..

Optionally, the new nuclear reactor is a small or medium modular reactor SMR/MMR.

Further, the objective is achieved by a new fuel assembly for a new nuclear reactor, the new fuel assembly being built by implementing a method according to any one of the embodiments described above. The new nuclear reactor is characterized by at least one parameter characteristic of the new nuclear reactor, wherein the new fuel assembly comprises:
- at least one new spacer grid comprising:
- a first number of spacer grid cells and
- a second number of receiving means for thimble tubes,
- the first number of fuel rods, wherein each fuel rod is to be loaded in respective spacer grid cell,
- the second number of thimble tubes, wherein each thimble tube is to be mounted in respective receiving means of the at least one new spacer grid.
wherein the first number of spacer grid cells and corresponding first number of fuel rods and the second number of thimble tubes and corresponding second number of receiving means and positions of the receiving means in relation to the spacer grids cells within the spacer grid are based on the at least one parameter characteristic of the new nuclear reactor.

The new fuel assembly has the same technical features and advantages as the corresponding features of the method for building a new fuel assembly described above. Consequently, these technical features and advantages are not repeated or explained anew in order to avoid unnecessary repetition.

Consequently, an improved new fuel assembly is provided.

Optionally, each of the spacer grid cells is a standard spacer grid cell and each of the fuel rods is a standard fuel rod and each of the thimble tubes is a standard thimble tube and each of the receiving means is a standard receiving means.

With standard is meant herein a component that is previously developed and readily available and hence provides a cost-effective design and manufacturing solution.

Since each of the spacer grid cells is a standard spacer grid cell and each of the fuel rods is a standard fuel rod and each of the thimble tubes is a standard thimble tube and each of the receiving means is a standard receiving means, these elements do not need to be developed per se for the purpose of the new fuel assembly to be built for a new nuclear reactor. These elements may be chosen from a list of standard elements available on the market as standard elements. Thus, standard spacer grid cells available on the market may be used.

Further, standard fuel rods available on the market may be used. Yet further, standard thimble tubes and standard receiving means available on the market may be used. Thus, the process of designing and building a new fuel assembly may be improved regarding the costs and the time required for the process.

Yet further, the objective is achieved by a new nuclear reactor comprising a number of new fuel assemblies according to any one of the embodiments described herein. The number of new fuel assemblies is determined based on at least one parameter characteristic of the new nuclear reactor.

Since the new nuclear reactor comprises a number of improved new fuel assemblies customized for the purpose of the new nuclear reactor, the operation of the new nuclear reactor may be more efficient with respect to i.a. efficient use of the fuel or cooling of the new nuclear reactor.

Further, the number of the new fuel assemblies in the new nuclear reactor may be determined by being calculated using a calculation program, such as a 3D core simulator, having the at least one parameter characteristic of the new fuel reactor as in input. The number of fuel assemblies may affect the flexibility to optimize the core loading for minimum neutron leakage and limited power peaking, given a core thermal power and/or size. Consequently, the number of the new fuel assemblies may depend on one or several requirements for the new nuclear reactor to be build, such as thermal power and size of the new nuclear reactor. Consequently, an improved new nuclear reactor is provided.

Optionally, the new nuclear reactor is a small or medium modular reactor SMR/MMR.

Further features of, and advantages with, the present invention will become apparent when studying the appended claims and the following detailed description.

### BRIEF DESCRIPTION OF THE DRAWINGS

Various aspects of the invention, including its particular features and advantages, will be readily understood from the example embodiments discussed in the following detailed description and the accompanying drawings, in which:
Fig.1 is a flow diagram illustrating a method according to the present disclosure,
Fig.2 illustrates schematically a cross section of a new spacer grid of a new fuel assembly according to the present disclosure,
Fig. 3 illustrates schematically a new fuel assembly comprising the new spacer grid illustrated in Fig. 2 and
Fig. 4 illustrates schematically a nuclear reactor comprising a number of new fuel assemblies illustrated in Fig. 3.

### DETAILED DESCRIPTION

Aspects of the present invention will now be described more fully. Like numbers refer to like elements throughout. Well-known functions or constructions will not necessarily be described in detail for brevity and/or clarity.

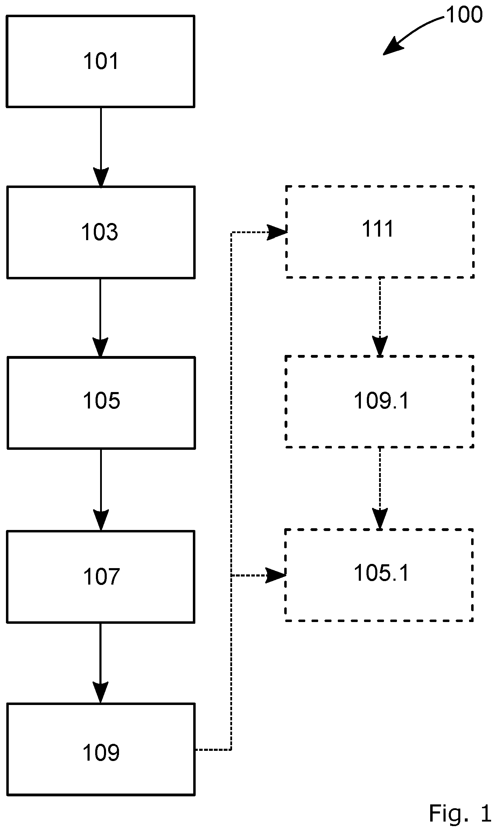

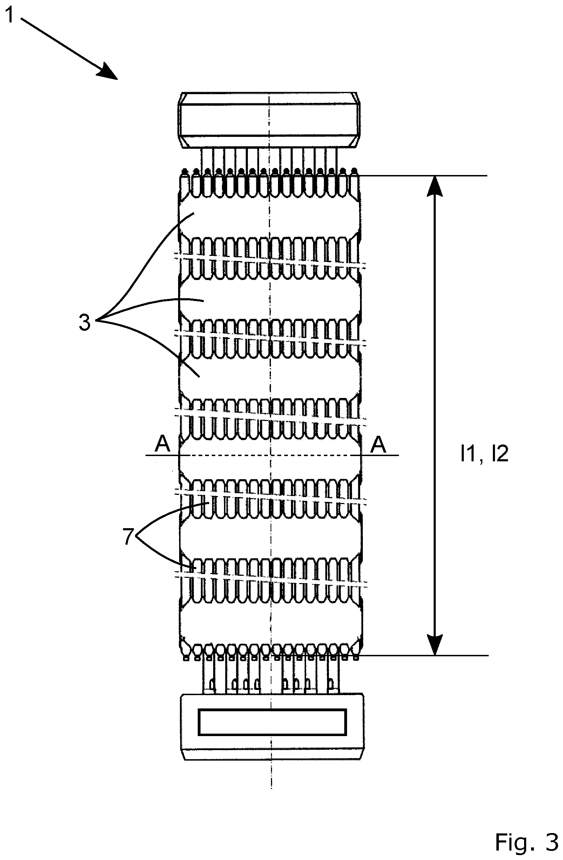

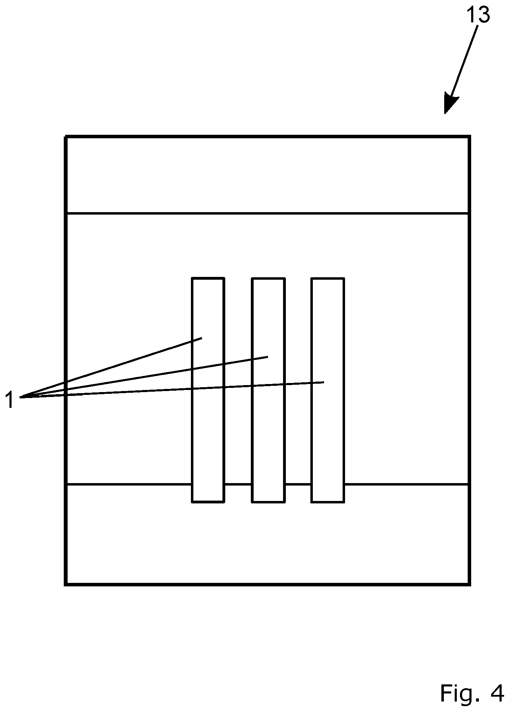

**Fig. 1** illustrates a flow diagram illustrating a method 100 according to the present disclosure. Thus, Fig. 1 illustrates a flow diagram illustrating a method 100 for building a new fuel assembly 1 for a new nuclear reactor 13. is illustrated very schematically in Fig. 4. A fuel assembly 1 is illustrated schematically in Fig. 3 and a nuclear reactor is illustrated very schematically in Fig. 4

As illustrated in Fig. 1, the method 100 comprises the following steps:
- determining 101 at least one parameter characteristic of the new nuclear reactor 13 and
- determining 103, based on the at least one parameter the following:
   - a first number of spacer grid cells 5 of a new spacer grid 3 to be assembled of the new fuel assembly 1 and corresponding first number of fuel rods 7, wherein each fuel rod 7 is to be loaded in respective spacer grid cell 5,
   - a second number of thimble tubes 9 and corresponding second number of receiving means 11 for the thimble tubes 9, wherein each of the second number of receiving means 11 is comprised by the new spacer grid 3 and wherein each thimble tube 9 is to be mounted in respective receiving means 11 of the new spacer grid 3, and
   - positions of the receiving means 11 in relation to the spacer grids cells 5 within the spacer grid 3.

The method 100 further comprises the following steps:
- assembling 105 at least one the new spacer grid 3 comprising the first number of spacer grid cells 5 and the second number of the receiving means 11 positioned in said determined positions according to the step 103,
- mounting 107 each of the second number of thimble tubes 9 in respective receiving means 11 of the second number of receiving means 11 within the at least one spacer grid 3 being assembled according to the step of assembling 105 at least one new spacer grid 3, and
- loading 109 each of the first number of fuel rods 7 into respective spacer grid cell 5 of the first number of spacer grid cells 5 of the at least one new spacer grid 3.

Optionally, the method 100 comprises:
- determining 111 a distance D between centers of neighbouring fuel rods 7 based on the at least one parameter characteristic of the new nuclear reactor 13 and
- loading 109.1 each of the first number of fuel rods 7 into respective spacer grid cell 5 of the first number of spacer grid cells 5 such as there is the distance D between centers of neighbouring fuel rods 7.

The optimum distance D between centers of neighbouring fuel rods 7 depends on, e.g., the total core flow, cycle length, targeted discharge burnup and availability of soluble boron to control reactivity.

According to some embodiments, the step of assembling 105 the at least one spacer grid 3 comprises connecting the first number of spacer grid cells 5 to each other or 3D-printing of the at least one spacer grid 3.

According to some embodiments, the method 100 may comprise the step of: assembling 105.1 several new spacer grids 3 each comprising the first number of spacer grid cells 5 and the second number of the receiving means 11 positioned in said determined positions, wherein the number of the several new spacer grids 3 is based on the parameter characteristic of the new nuclear reactor 13, wherein the several new spacer grids 3 are used during building the new fuel assembly 1 to achieve the new fuel assembly 1.

The at least one parameter characteristic of the new nuclear reactor 13 is at least one of: the rated core thermal power, the rated total core flow, an operation condition such as the cycle length and the soluble boron concentration, and dimensions of the reactor core.

Preferably, the method 100 is applied for designing a small or medium modular reactor SMR/MMR as the new nuclear reactor 13.

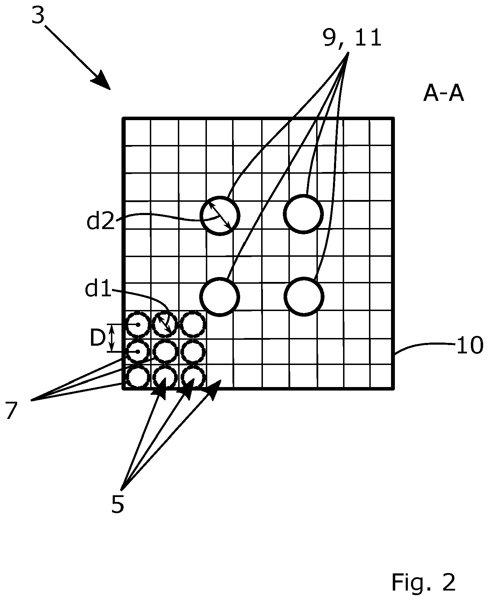

**Fig. 2** illustrates schematically a cross section of a new spacer grid 3 of a new fuel assembly 1 according to the present disclosure.

As illustrated in Fig. 2, the new spacer grid 3 comprises a first number of spacer grid cells 5 and corresponding first number of fuel rods 7. Each fuel rod 7 of the first number of fuel rods 7 is to be loaded in respective spacer grid cell 5. In Fig. 2 only some fuel rods 7 positioned in respective spacer grid cell have been illustrated. However, in the real case, each of the spacer grid cells 5 comprises one fuel rod 7 positioned in one spacer grid cell 5. Further, the spacer grid 3 comprises a second number of thimble tubes 9 and corresponding second number of receiving means 11 for the thimble tubes 9. Each of the second number of receiving means 11 is comprised by the new spacer grid 3 and each thimble tube 9 is to be mounted in respective receiving means 11 of the new spacer grid 3.

According to the invention the first number of spacer grid cells 5 and corresponding first number of fuel rods 7 has been determined based on the at least one parameter characteristic of the new nuclear reactor 13.

Further, according to the invention, the second number of thimble tubes 9 and corresponding second number of receiving means 11 for the thimble tubes 9 has been determined based on the at least one parameter characteristic of the new nuclear reactor 13.

Yet further, the positions of the receiving means 11 in relation to the spacer grids cells 5 within the spacer grid 3 has also been determined based on the at least one parameter characteristic of the new nuclear reactor 13.

According to some embodiments the spacer grid 3 comprises an outer mantle 10 enclosing the spacer grid cells 5.

According to some embodiments, each of the receiving means 11 may comprise a ring or a sleeve, wherein the step of mounting 107 of each of the second number of thimble tubes 9 in respective receiving means 11, as described in conjunction to Fig. 1, comprises attaching each of the thimble tubes 9 to respective ring or sleeve.

According to some embodiments, each of the receiving means 11 may be formed by neighbouring spacer grid cells 5 arranged such that a space is formed between the neighbouring spacer grid cells 5, which space forms one receiving means 11 for one of the thimble tubes 9. According to some embodiments, the neighbouring spacer grid cells 5 may be connected to each other, for example by welding, such that the space forming the receiving means 11 for one of the thimble tubes 9 is formed. According to some embodiments, the whole spacer grid 3 may be manufactured by a 3D-printing process as a one-piece spacer grid 3. Thus, the spacer grid cells 5 and the receiving means 11, and possibly the outer mantle 10 may be manufactured as a one-piece spacer grid 3 by a 3D-printing process.

As illustrated in Fig. 2, each of the fuel rods 7 has a first outer diameter d1 and each of the thimble tubes 9 has a second outer diameter d2, wherein the first outer diameter d1 and/or the second outer diameter d2 are/is determined based on the parameter characteristic of the new nuclear reactor 13.

The first outer diameter d1 of the fuel rods 7 is determined based on, e.g., the cycle length, targeted discharge burnup and availability of soluble boron to control reactivity.

The second outer diameter d2 of the thimble tubes 9 is determined based on, e.g., the cycle length, targeted discharge burnup and availability of soluble boron to control reactivity.

Each of the spacer grid cells 5 is a standard spacer grid cell and each of the fuel rods 7 is a standard fuel rod and each of the thimble tubes 9 is a standard thimble tube and each of the receiving means 11 is a standard receiving means. Thus, the spacer grid cells 5, the fuel rods 7 and the receiving means 11 may be collected from existing standard spacer grid cells, from existing standard fuel rods 7 and from existing standard receiving means 11 taking into consideration the form, the number and the dimensions of the spacer grid cells 5, the fuel rods 7 and the receiving means 11 depending on the at least one parameter characteristic of the new nuclear reactor 13.

The standard spacer grid cells are chosen from a limited number of standard grid cell designs.

**Fig.3** illustrates schematically a new fuel assembly 1 comprising a number of the new spacer grids 3 illustrated in Fig. 2.

As illustrated in Fig 3, each of the fuel rods 7 has a first length l1 and each of the thimble tubes 9 has a second length l2, wherein the first length l1 and the second length I2 are determined based on the parameter characteristic of the new nuclear reactor 13.

According to the illustrated embodiments, the first length l1 is equal the second length l2. However, according to some embodiments the first length l1 may be different than the second length l2.For example, the fuel rods 7 having the first length l1 may be longer than the thimble tubes 9 having the second length l2.

The first length l1 of fuel rods 7 and the second length I2 of the thimble tubes 9 are determined based on, e.g., core thermal power, total core flow and/or recirculation pump capacity.

**Fig. 4** illustrates schematically a new nuclear reactor 13 comprising a number of new fuel assemblies 1 illustrated in Fig. 3.

The nuclear reactor 13 is illustrated in a very schematical manner for the purpose of explanation of the important parts of the claimed invention. However, in the real case the nuclear reactor 13 is much more complicated and comprises several elements and systems.

As illustrated in Fig. 4, the new nuclear reactor 13 comprises a number of new fuel assemblies 1 illustrated in Fig. 3. In Fig. 4 three fuel assemblies 1 have been illustrated in a very schematical manner. However, the new nuclear reactor 13 may comprise a different number of the new fuel assemblies 1.

The number of new fuel assemblies 1 is determined based on, e.g., core thermal power and core size.

Preferably, the new nuclear reactor 13 is a small or medium modular reactor (SMR/MMR).

The present invention is not limited to the above-described preferred embodiments. Various alternatives, and modifications may be used. Therefore, the above embodiments should not be taken as limiting the scope of the invention, which is defined by the appending claims.

## Claims

1. A method (100) for building a new fuel assembly (1) for a new nuclear reactor (13), the method (100) comprises:
- determining (101) at least one parameter characteristic of the new nuclear reactor (13),
- determining (103), based on the at least one parameter:
- a first number of spacer grid cells (5) of a new spacer grid (3) to be assembled of the new fuel assembly (1) and corresponding first number of fuel rods (7), wherein each fuel rod (7) is to be loaded in respective spacer grid cell (5),
- a second number of thimble tubes (9) and corresponding second number of receiving means (11) for the thimble tubes (9), wherein each of the second number of receiving means (11) is comprised by the new spacer grid (3) and wherein each thimble tube (9) is to be mounted in respective receiving means (11) of the new spacer grid (3), and
- positions of the receiving means (11) in relation to the spacer grids cells (5) within the spacer grid (3),
- assembling (105) at least one said new spacer grid (3) comprising the first number of spacer grid cells (5) and the second number of the receiving means (11) positioned in said determined positions according to the step (103),
- mounting (107) each of the second number of thimble tubes (9) in respective receiving means (11) of the second number of receiving means (11) within the at least one spacer grid (3) being assembled according to the step of assembling (105) at least one new spacer grid (3), and
- loading (109) each of the first number of fuel rods (7) into respective spacer grid cell (5) of the first number of spacer grid cells (5) of the at least one new spacer grid (3).

2. The method (100) according to claim 1, wherein each of the fuel rods (7) has a first length (11) and each of the thimble tubes (9) has a second length (l2), wherein the first length (11) and the second length (l2) are determined based on the parameter characteristic of the new nuclear reactor (13).

3. The method (100) according to any one of the preceding claims, wherein each of the fuel rods (7) has a first outer diameter (d1) and each of the thimble tubes (9) has a second outer diameter (d2), wherein the first outer diameter (d1) and/or the second outer diameter (d2) are/is determined based on the parameter characteristic of the new nuclear reactor (13).

4. The method (100) according to any one of the preceding claims, wherein the method (100) comprises:
- determining (111) a distance (D) between centers of neighbouring fuel rods (7) based on the at least one parameter characteristic of the new nuclear reactor (13) and
- loading (109.1) each of the first number of fuel rods (7) into respective spacer grid cell (5) of the first number of spacer grid cells (5) such as there is the distance (D) between centers of neighbouring fuel rods (7).

5. The method (100) according to any one of the preceding claims, wherein the step of assembling (105) the at least one spacer grid (3) comprises connecting the first number of spacer grid cells (5) to each other or 3D-printing of the at least one spacer grid (3).

6. The method according to any one of the preceding claims, wherein each of the receiving means (11) comprises a ring or a sleeve, wherein the step of mounting (107) of each of the second number of thimble tubes (9) in respective receiving means (11) comprises attaching each of the thimble tubes (9) to respective ring or sleeve.

7. The method (100) according to any one of the preceding claims, wherein each of the spacer grid cells (5) is a standard spacer grid cell and each of the fuel rods (7) is a standard fuel rod and each of the thimble tubes (9) is a standard thimble tube and each of the receiving means (11) is a standard receiving means.

8. The method (100) according to claim 7, wherein the standard spacer grid cells are chosen from a limited number of standard grid cell designs.

9. The method (100) according to any one of the preceding claims, comprising: assembling (105.1) several new spacer grids (3) each comprising the first number of spacer grid cells (5) and the second number of the receiving means (11) positioned in said determined positions, wherein the number of the several new spacer grids (3) is based on the parameter characteristic of the new nuclear reactor (13), wherein the several new spacer grids (3) are used during building the new fuel assembly (1) to achieve the new fuel assembly (1).

10. The method (100) according to any one of the preceding claims, wherein the at least one parameter characteristic of the new nuclear reactor (13) is at least one of: the rated core thermal power, the rated total core flow, an operation condition such as the cycle length and the soluble boron concentration, and dimensions of the reactor core.

11. The method (100) according to any one of the preceding claims, wherein the new nuclear reactor (13) is a small or medium modular reactor (SMR/MMR).

12. A new fuel assembly (1) for a new nuclear reactor (13), the new fuel assembly (1) being built by implementing a method (100) according to any one of claims 1 to 11, wherein the new nuclear reactor (13) is **characterized by** at least one parameter characteristic of the new nuclear reactor (13), wherein the new fuel assembly (1) comprises:
- at least one new spacer grid (3) comprising:
- a first number of spacer grid cells (5) and
- a second number of receiving means (11) for thimble tubes (9),
- the first number of fuel rods (7), wherein each fuel rod (7) is to be loaded in respective spacer grid cell (5),
- the second number of thimble tubes (9), wherein each thimble tube (9) is to be mounted in respective receiving means (11) of the at least one new spacer grid (3),
wherein the first number of spacer grid cells (5) and corresponding first number of fuel rods (7) and the second number of thimble tubes (9) and corresponding second number of receiving means (11) and positions of the receiving means (11) in relation to the spacer grids cells (5) within the spacer grid (3) are based on the at least one parameter characteristic of the new nuclear reactor (13).

13. The new fuel assembly (1) according to claim 12, wherein each of the spacer grid cells (5) is a standard spacer grid cell and each of the fuel rods (7) is a standard fuel rod and each of the thimble tubes (9) is a standard thimble tube and each of the receiving means (11) is a standard receiving means.

14. A new nuclear reactor (13) comprising a number of new fuel assemblies (1) according to claim 12 or 13, wherein the number of new fuel assemblies (1) is determined based on at least one parameter characteristic of the new nuclear reactor (13).

15. The new nuclear reactor (13) according to claim 14, wherein the reactor is a small or medium modular reactor (SMR/MMR).
